# EUROPEAN PATENT APPLICATION

(11) **EP 4 647 991 A1**
(43) Date of publication of application: **12.11.2025**
(21) Application number: 24174832.6
(22) Date of filing: 08.05.2024
(51) Int. Cl.: G06Q 20/22, G06Q 20/40, G06Q 20/42

(54) **MICROPAYMENT SYSTEMS AND METHODS**

(71) Applicant: Mastercard International Incorporated, Purchase, NY 10577 (US)
(72) Inventor: HOSNY, Ahmed, Letterkenny, F92 WP2H (IE)
(74) Representative: Keltie LLP

(57) **Abstract**

A method of making micropayments using an open banking system is described. This may be used for a customer (1) registered for micropayments to a merchant (2) using an open banking provider (71) within established payment limits using variable recurring payments. A suitable registration process is also described. The method comprises on initiation of a payment by the customer (1) to the merchant (2), first determining the payment to be secure and not fraudulent. If the payment is determined to be secure and not fraudulent, the open banking provider (71) authorises the payment if it is within the established payment limits. A suitable transaction system is also described.

## Description

### TECHNICAL FIELD

The present disclosure relates to micropayment systems and methods.

### BACKGROUND

There are a number of commercial contexts where it is desirable to make small payments. These include tips to service staff and support for creators, in-app payments in social gaming, video and music downloads, and charitable giving. While such small payments have traditionally been made in cash, payment is increasingly digital - it is therefore desirable to make micropayments digitally.

Digital micropayments are one of the most rapidly growing forms of transaction, but they are problematic for merchants as the per-transaction cost using existing transaction infrastructures ("payment rails" or "card rails") is relatively high, as these transactions are typically no easier to process than any other form of transaction. Some merchants, typically in social network environments, introduce a closed payment system based on tokens purchased ahead of the micropayment to address this issue, with the tokens being exchanged for micropayment and eventually cashed out. While mitigating the merchant's problems, this arrangement is inconvenient for both the sender and the recipient of the micropayment.

Consequently, while there is a clear need for an effective digital micropayment solution, the following challenges exist and need to be addressed:
- High cost of acceptance: Fixed authorization, clearing, and interchange fees drive a high cost of acceptance, making merchants reluctant to invest in the micropayments experience on cards.
- Higher fraud rate risk: There is concern that micropayments may be specifically targeted as they are less likely to be guarded against by consumers or merchants, and fraud is likely to be underreported as there will be little desire to incur investigation costs.

- Poor consumer experience: Consumers will expect a very light touch interaction for a micropayment at checkout, and this is not currently provided. Merchants are coming up with different workarounds for micropayments, causing inconsistent customer experience and confusion. Some merchants may even put a hold on consumer's account for a period, while others utilize a delayed authorization model. This is a significant deterrent to customer adoption.
- Alternative payment methods (APMs): If these offer a better consumer experience, these may be attractive to consumers and consequently drive merchant adoption - this may result in the fragmentation of the digital spending of a consumer among a number of different payment methods.

The present disclosure has been devised to mitigate or overcome at least some of the above-mentioned problems.

### SUMMARY OF THE DISCLOSURE

According to a first aspect of the present disclosure there is provided a method of making micropayments using an open banking system, comprising, for a customer registered for micropayments to a merchant using an open banking provider within established payment limits using variable recurring payments: on initiation of a payment by the customer to the merchant, determining the payment to be secure and not fraudulent; and if the payment is determined to be secure and not fraudulent, the open banking provider authorising the payment if it is within the established payment limits.

Using this approach, a straightforward user experience can be provided for the consumer without introducing cost, complexity or risk for the merchant. The Open Banking model, with the use of Variable Recurring Payments, can be used together with session security and transaction security to enable micropayments to take place safely and efficiently without the need for a full authorisation process to take place for every payment.

In embodiments, the open banking provider may be an open banking service providing open banking services on behalf of an account servicing payment service provider.

The step of determining the payment to be secure may comprises using a web security service to determine that a session for the payment is secure. In some embodiments, the merchant may invokes the web security service, whereas in others the open banking service may invoke the web security service.

The step of determining the payment to be not fraudulent may comprise using a fraud detection service to determine that the payment is not fraudulent. In some embodiments, the merchant may invokes the fraud detection service, whereas in others the open banking service may invoke the fraud detection service.

In embodiments, registration of the customer for micropayments may be associated with a Consent ID. In appropriate embodiments, the Consent ID may be provided by the account servicing payment service provider.

According to a second aspect of the present disclosure, there is provided a method of establishing use of micropayments by a customer for a merchant, comprising: the customer registering with an open banking provider to make micropayments to the merchant using variable recurring payments; in a secure session, the customer providing spending parameters agreed with the merchant to the open banking provider and linking the micropayments to a payment account; and the open banking provider linking the payment of micropayments by the customer to the merchant using the payment account to a Consent ID, the open banking provider providing the Consent ID to the merchant.

In embodiments, the open banking provider may be an open banking service providing open banking services on behalf of an account servicing payment service provider. In such a case, the open banking service may obtain the Consent ID from the account servicing payment service provider.

The method may further comprise determining a session to be a secure session, wherein determining the session to be secure comprises using a web security service. Such a web security service may be invoked by the merchant or the open banking service in appropriate embodiments.

In embodiments, the method may further comprise agreeing the spending parameters with the merchant prior to providing the spending parameters to the open banking provider. In appropriate embodiments, the open banking service may establish a connection to the account servicing payment service provider for the customer to confirm spending parameters and link micropayments to a payment account with the account servicing payment service provider.

According to a third aspect of the present disclosure, there is provided a transaction system for enabling micropayments using an open banking system, comprising: an open banking service adapted to register a customer for micropayments to a merchant with an account servicing payment service provider, and to process micropayment transactions received from the merchant in accordance with the registration; a spending rules service adapted to store spending parameters associated with a micropayment registration and to provide the spending rules to the open banking service.

Such a transaction system may further comprise a web security service to determine whether a session is secure. Such a web security service may be adapted for use for registration sessions, payment sessions, or both. This web security service may be adapted to be invoked by the open banking service or may be adapted to be invoked by the merchant.

Such a transaction system may further comprise a fraud detection service to determine whether a transaction is legitimate. This fraud detection service may be adapted to be invoked by the open banking service or may be adapted to be invoked by the merchant.

### BRIEF DESCRIPTION OF THE DRAWINGS

One or more embodiments of the disclosure will now be described, by way of example only, with reference to the accompanying drawings, in which:
Figure 1 shows an open banking infrastructure suitable for implementing embodiments of the disclosure;
Figure 2 shows a registration process according to an embodiment of the disclosure;
Figure 3 shows a payment process according to an embodiment of the disclosure;
Figures 4A to 4G illustrate user interface screens in a specific implementation of a registration process for an embodiment of the disclosure;
Figures 5A and 5B illustrate functional components used for first and second implementations respectively of a registration process for an embodiment of the disclosure;
Figures 6A and 6B illustrate process flows for the first and second implementations respectively of a registration process illustrated in Figures 5A and 5B;
Figures 7A and 7B illustrate user interface screens in a specific implementation of a payment process for an embodiment of the disclosure;
Figures 8A, 8B and 8C illustrate functional components used for first, second and third implementations respectively of a payment process for an embodiment of the disclosure; and
Figures 9A, 9B and 9C illustrate process flows for the first, second and third implementations respectively of a payment process illustrated in Figures 8A, 8B and 8C.

### DETAILED DESCRIPTION

General and specific embodiments of the disclosure will be described below with reference to the Figures.

As indicated above, an effective system for making micropayments can be established by using variable recurring payments in an Open Banking architecture. As will be described below, this can be used to produce a seamless set of interactions while providing necessary security guarantees for every party.

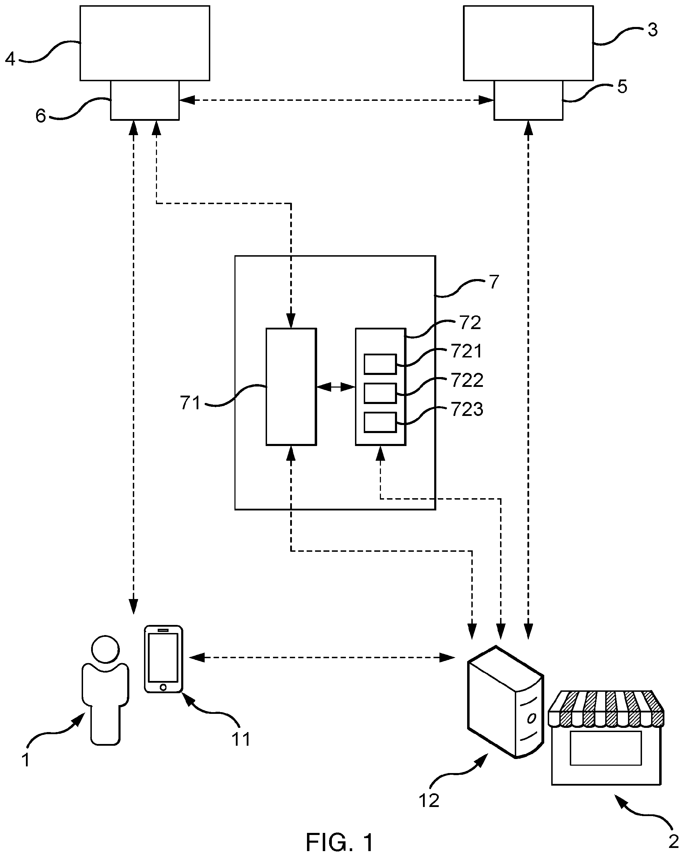

Figure 1 shows an architecture suitable for implementing embodiments of the disclosure. This architecture supports an Open Banking framework. The consumer/cardholder 1, in this case the maker of a micropayment, interacts using their payment device, in this case a mobile telephone 11. The cardholder has an account with card issuing bank 4, and the cardholder interacts with the card issuing bank through an Open Banking interface 6 (this may be, or be part of, an interface with the card issuing bank for all matters relating to their account).

The payment device 11 transacts with a merchant 2, in this case through an appropriate merchant computing system 12, which may in some use cases (for example, in-app purchases) be a merchant server and may in other use cases (providing an in-store tip) be a merchant POS terminal. The merchant 2 has an associated acquiring bank 3 with an Open Banking interface 5. Also shown here is a payment infrastructure 7 which provides certain services, as is described further below. Here, the payment infrastructure provides an open banking service 71 to manage an open banking transaction, and a rules, fraud and risk service 72 comprising a session security module 721, a fraud detection module 722, and a rules module 723.

Open Banking supports account-to-account (A2A) transfers as a basic transaction type. Conventionally, this type of transaction proceeds as follows. Firstly, the basis for payment is established between the consumer 1 (through their computing device 11) and the merchant 2 (through their computer 12). The merchant 2 then initiates payment through their payment initiation institution, which is their acquiring bank 3 (or payment service provider 7) acting through its Open Banking interface 5. This payment initiation is then communicated to the account holding institution - here, the issuing bank 4 where the consumer 1 holds their account, acting through its Open Banking interface. The issuing bank 4 authenticates the consumer 1 as account holder and obtains such user consent as is required for the transaction, after which the transaction proceeds and funds are transferred from the issuing bank 4 to the acquiring bank 3 with the consumer account with the issuing bank 4 debited accordingly. Open Banking also supports Variable Recurring Payments (VRP), which is a mechanism by which authorised payment providers can be connected to consumer accounts, so that they can make payments on the customer's behalf, operating within limits agreed with the consumer. While these can perform a similar function to direct debits in conventional banking, the model is different - a direct debit "pulls" payments to a payee on the basis of a pre-completed customer mandate, whereas a VRP "pushes" payments from the consumer to the payee via Open Banking and its consent to pay mechanisms.

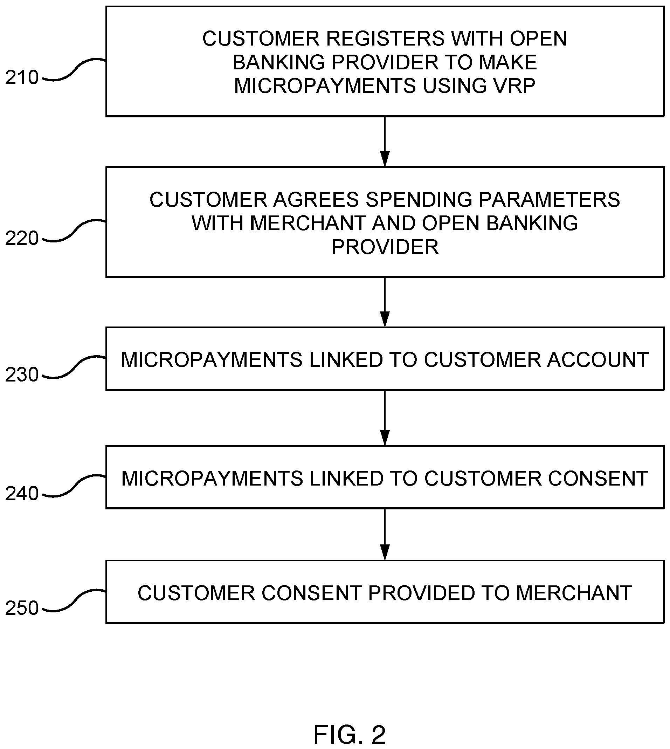

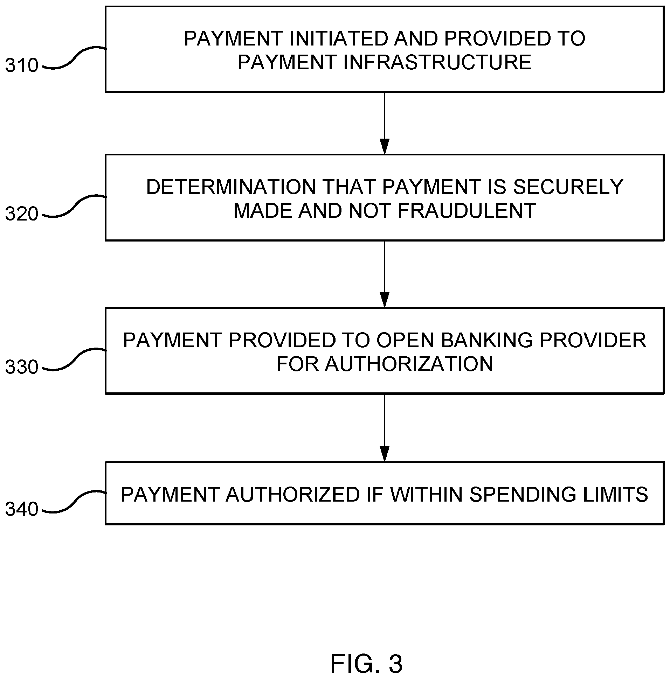

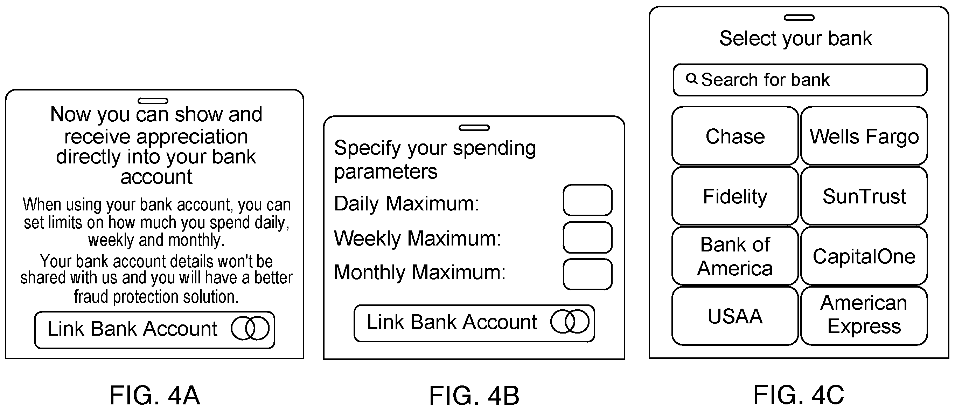

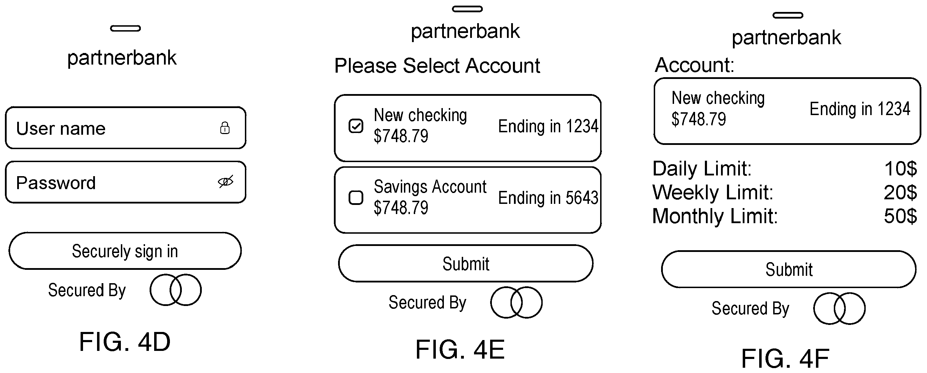

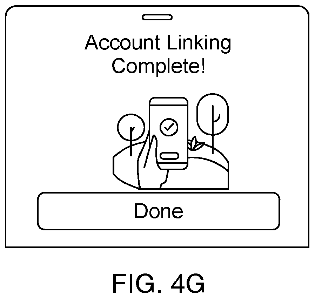

In embodiments of the disclosure, such a VRP process is used to support methods and systems that enable an effective digital micropayment structure to operate. Embodiments of the disclosure illustrating principles of registration and payment in a micropayments system are described below with reference to Figures 2 and 3. A specific embodiment is then described in detail with reference to Figures 4 to 9, indicating all information flows.

Figure 2 illustrates a registration process. First of all, the customer/cardholder registers 210 with an open banking provider to make micropayments to a merchant using variable recurring payments (note that either customer or cardholder, or user, may be used to refer to the payor here - user is most generally used below). The open banking provider here may be an open banking service associated with a transaction infrastructure that provides open banking services for banks (more generally in the context of Open Banking, Account Servicing Payment Service Providers, or ASPSPs), or may be an ASPSP itself, possibly accessed through an open banking service. In a secure session, the user provides 220 spending parameters agreed with the merchant to the open banking provider, and links 230 the micropayments to a payment account. The open banking provider links 240 the micropayments with a user consent, and provides 250 the user consent to the merchant. This process establishes that micropayments from the user to the merchant can be made on the basis of an established user consent.

Figure 3 illustrates a payment process. The existence of the established user consent supports a seamless transaction experience for the user. On initiation 310 of a payment by the user to the merchant, the payment is provided to the payment infrastructure which determines 320 that the payment is securely made and not fraudulent. The payment infrastructure then provides 330 the payment to the open banking provider, who authorises and makes 340 the payment if it is within the established payment limits.

Specific embodiments using this approach will now be described in more detail with reference to Figures 4 to 9, which describe alternative implementations for both the registration and the payment stage. Before this, the system elements of an Open Banking framework as shown in Figure 1 will be described in more detail.

In Figure 1, the payment infrastructure 7 is shown to provide an open banking service 71 to manage an open banking transaction, and a rules, fraud and risk service 72 comprising a session security module 721, a fraud detection module 722, and a rules module 723. The open banking service 71 is here adapted to support VRPs - such open banking services are provided by, for example, through Open Banking platforms such as aiia and Finicity. The rules, fraud and risk service 72 here provides a session security module 721, such as that provided by NuData, along with a fraud detection module 722, such as the Al-implementing fraud detection solution provided by Brighterion. Spending rules may be established through a rules module 723 such as the Mastercard/Brighterion Decision Management Platform.

Using this approach, the solution provides Real Time Payment (RTP) capabilities directly from the user's account and will provide the user's bank (ASPSP) with additional assurance that the payment is safe. When the user registers for the solution, they specify with the merchant - typically through a merchant app - their spending limits. The user is then authenticated by their bank using the Open Banking solution and are shown the limits they have set for their agreement. The limits are then enforced by the transaction scheme (using, for example, the DMP platform) and/or the bank (if they have that capability).

The merchant integrates NuData into the registration and payment flows for security. At the time that the transaction is initiated, they feed the Brighterion service with the payment data (sender account details, recipient account details, amount, interaction, etc.). When the merchant makes the call for payment initiation through Open Banking, they will provide a session receipt which is verified by the Open Banking platform against NuData to be secure and Brighterion that it is not fraudulent. The payment is then checked by DMP for the spending rules. Once all of this is done, the payment is passed to the Bank (ASPSP) for final processing and approval.

Notifications are sent to the merchant when payment processing is complete.

In this approach, the merchant uses the open banking service 71 for both account linking and payments, and also reports payment events to the rules, fraud and risk service 72 so that it can provide effective payment security. The rules, fraud and risk service 72 is used to establish spending rules, provide transaction security, and provide fraud analysis. The open banking service 71 checks risk scores for payments before passing them to the bank/ASPSP - it may also be empowered to decline payments on behalf of the bank/ASPSP in certain circumstances or if certain criteria are met. The bank/APSP may also check the risk score.

The standard approach is for the open banking service 71 to use VRP to enable the bank/ASPSP to process payments in real time. In certain circumstances, Open Banking payments may not be available - if so, fallbacks may be available, such as RTP or ACH (payment using an Automated Clearing House) with payment indicator.

Specific registration and payment structures and flows for use in embodiments of the disclosure will now be described in more detail. First of all, registration will be described with reference to Figures 4 to 6.

Figures 4A to 4G illustrate different stages of the customer journey in registration through the user interface at the user mobile device during the course of registration. First of all, the user is notified (Figure 4A) about the possibility of making micropayments in this way - this may, for example, be reachable by a link from a merchant app (the case illustrated here), but other possibilities are available, such as initiation by reading of a QR code at merchant premises. If the user wishes to take this option, they then establish payment limits for these micropayments (Figure 4B), after which they are brought to the Open Banking provider to select their bank (Figure 4C). On selection, the user logs in to their bank portal for Open Banking (Figure 4D) and selects an account to use for micropayments (Figure 4E) and confirms the agreed payment limits with their bank (Figure 4F). The user is then notified of successful micropayment set up (Figure 4G), for example by the merchant app.

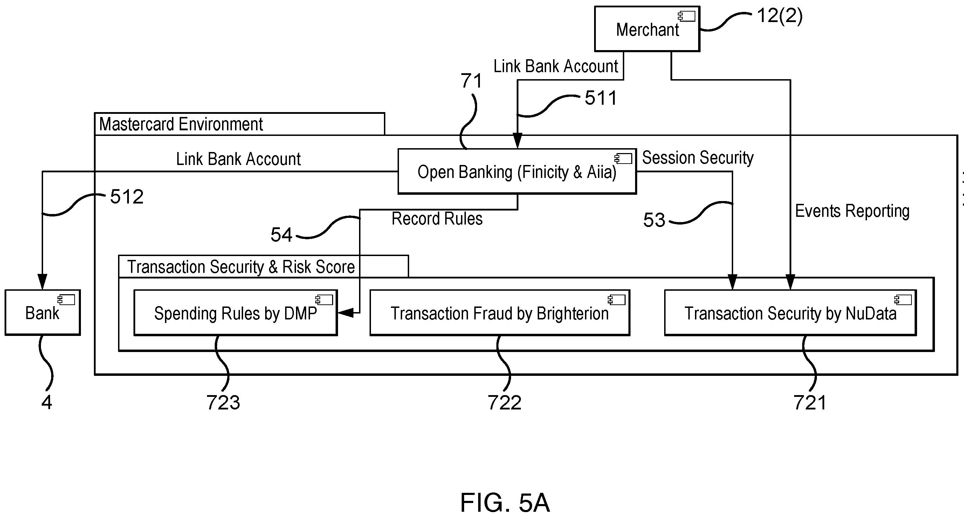

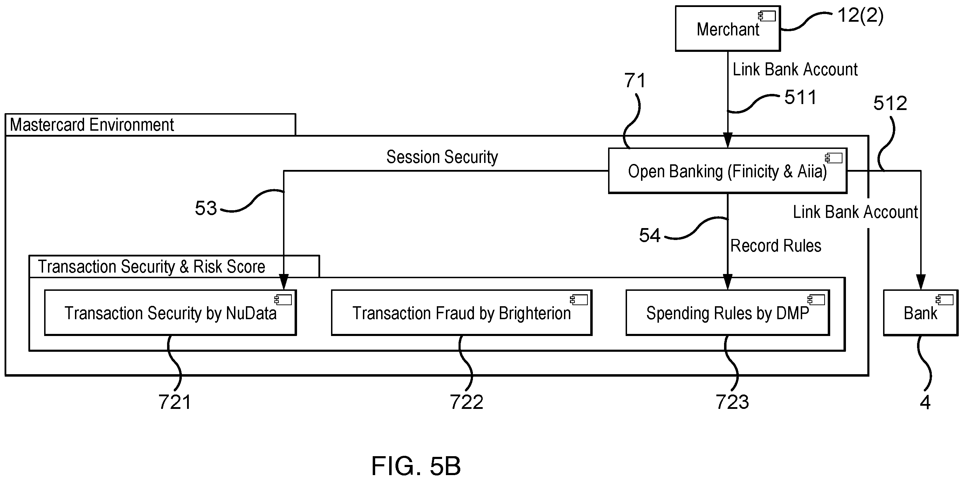

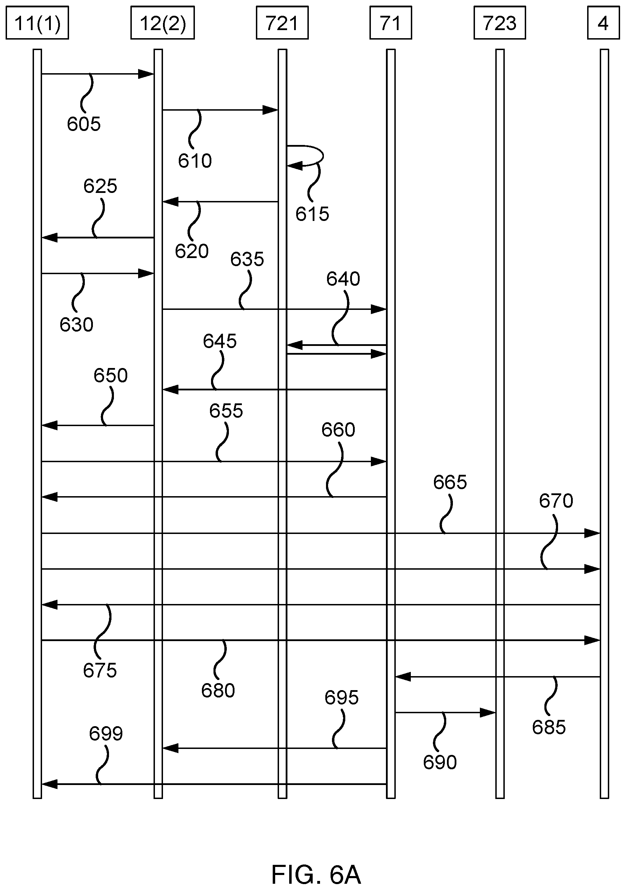

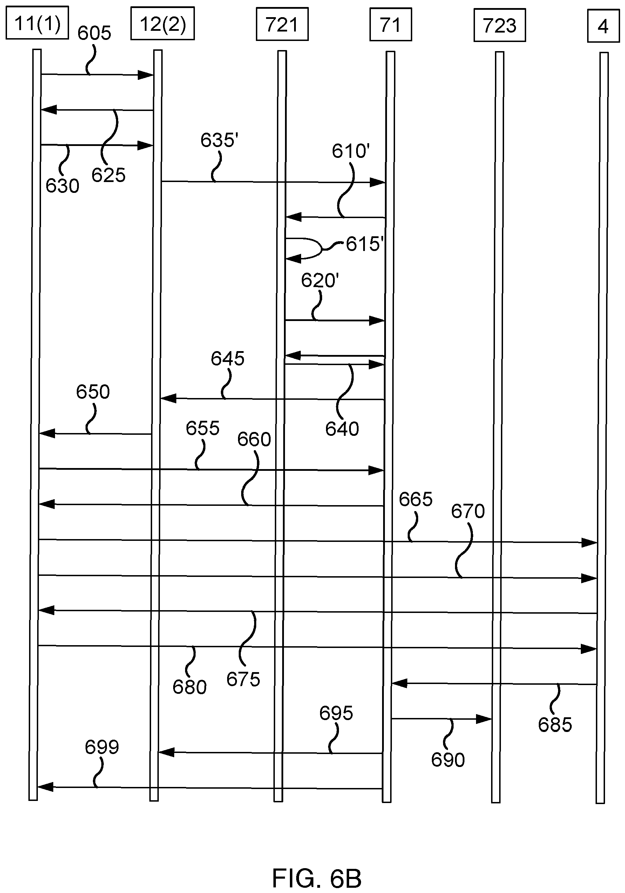

Two different implementation options for this registration process will now be discussed: one option, in which the merchant is integrated directly with the open banking service and the session security module of the rules, fraud and risk service, is shown in Figures 5A and 6A; with another option, in which the merchant is integrated only with the open banking service, is shown in Figures 5B and 6B. Figures 5A and 5B show system components and their interaction, whereas Figures 6A and 6B show flow sequences.

Figures 5A and 5B show the same components, corresponding to relevant components of Figure 1, but the connections between them are different in each case. In the Figure 5A case, the merchant 2, through the merchant computing system 12, connects to the open banking service 71 for bank account linking 511 and to the session security module 721 for event reporting 52. The open banking service 71 connects to the issuing bank 4 for bank account linking 512, to the session security module 721 for session security 53, and to the rules module 723 for rules recordal 54.

The associated sequence flow is shown in Figure 6A. First of all, the consumer 1, through their payment device 11, accepts the merchant's offer to link 605 a bank account for micropayments. The next step is for the merchant to use the session security module 721 to verify that account linking is secure - this may involve the session security module 721 receiving 610 user web attributes, which may include the following:
i. Session ID
ii. IP Address
iii. Device Fingerprint
iv. User last Login Date
v. User behavioural data
vi. User ID

The session security module 721 then checks the received attributes and determines 615 whether this provides a secure connection, reporting back 620 to the merchant. If the connection is deemed not to be secure, the consumer may be logged in again before linking their account. The merchant will then request 625 the user to set their spending parameters. These may include one or more of the following:
a. Hourly Limit
b. Daily Limit
c. Weekly Limit
d. Monthly Limit
e. Per Recipient Limits
f. Blackout Hours

These spending parameters are provided 630 to the merchant, who now initiates 635 an account linking request to the open banking service 71, providing the open banking service 71 with the spending parameters set up between user and merchant along with the Session ID for the current session. The open banking service 71 verifies 640 the security of this session with the session security module 721 - again determining whether the existing session is secure or whether a new session needs to be initiated - at which point open banking account linking can begin. This starts with the open banking service 71 communicating 645 to the merchant a redirect to the user to the account linking flow, which is provided 650 to the user, for example through the merchant app. The user is now in a session with the open banking service 71, and provides 655 a choice of bank, whereupon the open banking service 71 provides 660 a login to their chosen bank. The user logs in to their chosen bank 665, and selects 670 a payment account. The bank on receiving the VRP request from the open banking service 71 displays 675 the spending parameters to the user, at which point the user approves 680 both the payment parameters and the account linking to the bank. The bank then notifies 685 the open banking service 71 that the user has accepted the spending parameters, and with the notification the bank also provides a Consent ID to the open banking service 71. At this point, the open banking service 71 stores 690 the spending parameters in the rules module 723, where they are associated with the Consent ID. As will be seen below, the steps of providing a Consent ID and storage of the spending parameters are significant to support an efficient micropayment process. The open banking service 71 provides 693 the Consent ID to the merchant. At this point, the open banking service 71 also redirects 695 the user back to the merchant (merchant app), and the merchant displays 699 the registration result back to the user.

Figure 5B shows a case in which the merchant 2, through the merchant computing system 12, connects to the open banking service 71 for bank account linking 511, but this is the only connection made by the merchant - all other connections (to the session security module 721 for session security 53, to the rules module 723 for rules recordal 54, and to the issuing bank 4 for bank account linking 512) are with the open banking service 71.

This leads to a different process flow, as is seen in Figure 6B (the same reference numbers are used where the step in unchanged). As before, the consumer 1, through their payment device 11, accepts the merchant's offer to link 605 a bank account for micropayments. As the merchant is not linked to the session security module 721, the sequence proceeds directly to the merchant requesting 625 the user to set their spending parameters. As before, the user provides 630 these spending parameters to the merchant, who initiates 635' an account linking request to the open banking service 71, providing the open banking service 71 with the spending parameters set up between user and merchant. The open banking service 71 now uses the session security module 721 to verify that account linking is secure - again, this involves the session security module 721 receiving 610' user web attributes, which in this case will not include Session ID. The session security module 721 then checks the received attributes and determines 615' whether this provides a secure connection, reporting back 620' in this case to the open banking service 71. As before, if the connection is deemed not to be secure, the consumer may be logged in again before linking their account. At this point, open banking account linking begins, and the registration process continues and completes as shown in Figure 6A.

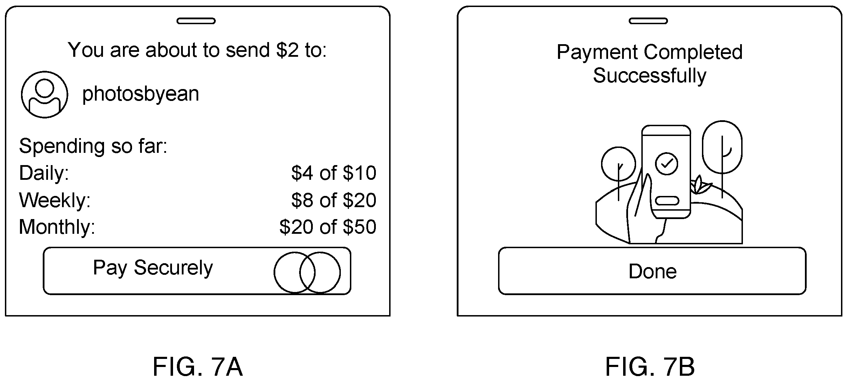

The making of a micropayment, once the registration process has been completed, is illustrated in Figures 7 to 9. Figures 7A and 7B illustrate the customer journey in the making of a micropayment, which as keen be seen is minimal and straightforward - the user on initiating a payment simply gets an indication of the micropayment and how it tracks against their spending limits (Figure 7A) with a confirmation button, and if the user confirms they simply get a confirmation screen (Figure 7B) on success. This level of interaction is consistent with the nature of the transaction and therefore provides an appropriate user experience for payment.

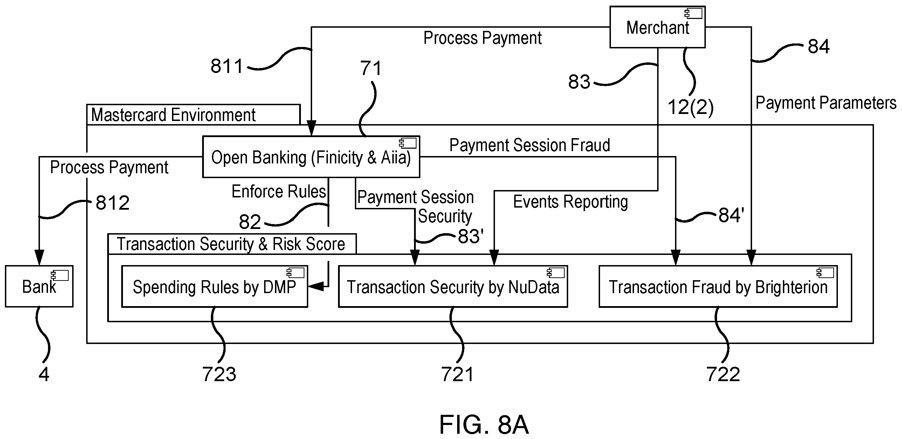

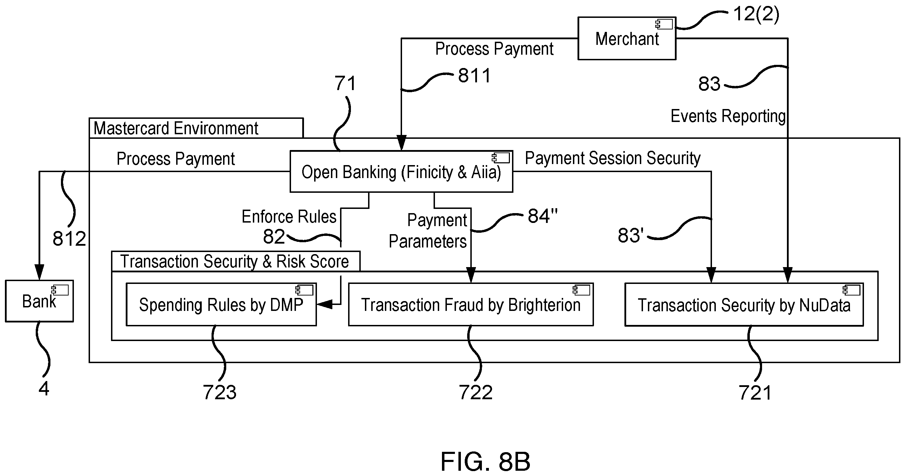

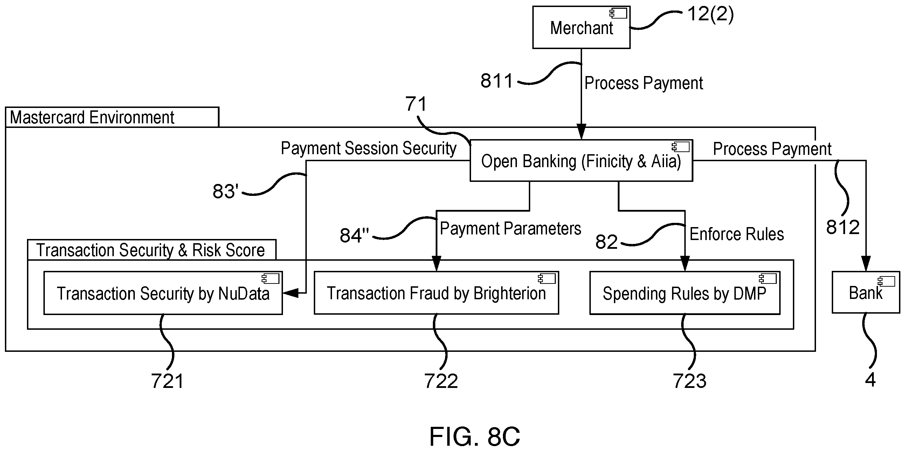

Three different ways of implementing the transaction are shown, varying on the linking between components as shown in Figures 8A, 8B and 8C. Some connections are the same in each arrangement- in each, the merchant connects to the open banking service 71 to process payment 811, and the open banking service 71 connects to the bank to process payment 812 similarly. Likewise, the open banking service 71 connects to the rules module 723 for rule enforcement 82 in each case. Other connections depend on the linkage between different systems and components.

Figure 8A shows an arrangement in which the merchant 2, through merchant computing apparatus 12, is linked not only to the open banking service 71 but also to the session security module 721 for session security and events reporting 83 and the fraud detection module 722 to provide payment parameters 84. The open banking service 71 connects to the session security module 721 for payment session security 83', and to the fraud detection module 722 for payment session fraud determination 84'.

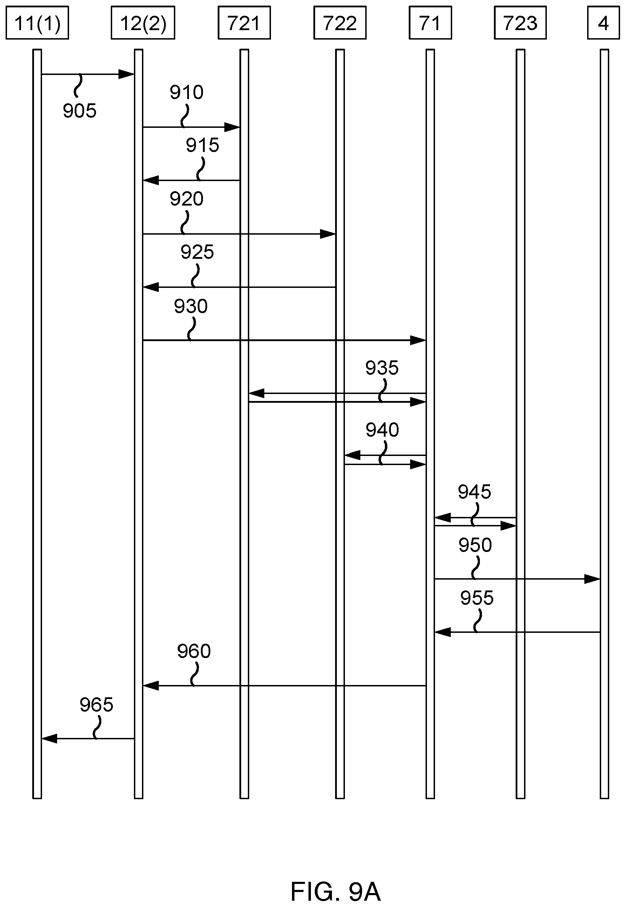

The associated sequence flow is shown in Figure 9A. The payment flow uses an Account on File capability to initiate the payment, which together with the establishment of Variable Recurring Payments, supports a vastly simplified (and improved) customer experience.

First of all, the user starts 905 a payment, for example through the merchant app. The merchant, who is linked to the session security module 721, uses it to verify that the payment is secure. The session security module 721 is provided 910 with web attributes such as the following:
i. Session ID
ii. IP Address
iii. Device Fingerprint
iv. User last Login Date
v. User behavioral data
vi. User ID
vii. Recipient ID
viii. Recipient last IP Address
ix. Recipient last login date

The session security module 721 checks the received attributes and decides whether it the session is secure, or if the user or the recipient needs to be logged in again by the provider before making the payment, and returns 915 this result to the merchant.

Here, the merchant 2 is also linked to the fraud detection module 722, and reports 920 the payment parameters and/or attributes to it. These payment attributes may include the following:
i. Session ID
ii. Amount
iii. Other forms of payment
iv. Recipient income last hour
v. Recipient income last day
vi. Recipient last payment date
vii. Recipient other channels

The fraud detection module 722 checks the received attributes and decides the payment is legitimate, or if further confirmation is needed - for example, by having the user be authenticated by their bank again before making the payment - reporting 925 the result back to the merchant.

When the fraud check is complete - so it is established that the session is secure, and the payment is legitimate - the merchant makes a payment request 930 to the open banking service 71. The following parameters are included in the payment request:
a. Open Banking receives the payment request with the following parameters:
   i. Consent ID (received as part of the Account Linking Flow)
   ii. Session ID
   iii. Amount
   iv. Recipient Account info

At this point, the open banking service 71 verifies 935 session security with the session security module 721 and verifies 940 transaction legitimacy with the fraud detection module 722. The open banking service also verifies 945 that the payment meets the payment parameters stored in the rules module 723.

If all these requirements are met, the transaction falls within the terms of the Consent ID, and it can simply be made without further authorization. Consequently, the open banking service 71 initiates 950 an account to account open banking payment at the bank under the Consent ID - all relevant information (such as payment attributes and determinations of security and legitimacy) may be passed to the bank at this point. The bank notifies 955 the open banking service 71 of the result, with the open banking service 71 in turn notifying 960 the merchant of the result and displaying 965 it to the user.

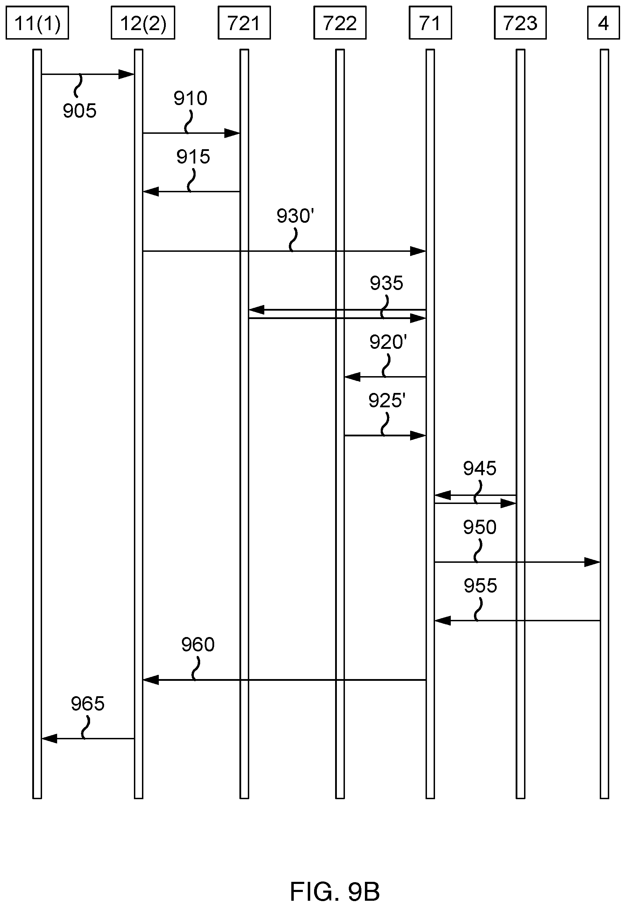

Figure 8B shows an arrangement in which the merchant 2, through merchant computing apparatus 12, is linked to the open banking service 71 and to the session security module 721 but not to the fraud detection module 722. The open banking service 71 also connects as before to the session security module 721 for payment session security 83', and to the fraud detection module 722 for fraud determination 84". The associated sequence flow is shown in Figure 9B - it is largely similar to that provided in Figure 9A (where steps are the same, the same reference number is given), but the differences are set out below.

As the merchant 2 is still linked to the security session module 721, the opening steps are the same. The flows diverge after session security is established - as the merchant 2 does not have access to the fraud detection module 722, the merchant makes a payment request 930' to the open banking service 71 - the parameters are as before, but here also include information needed by the fraud detection module 722, such as the following:
i. Other forms of payment
ii. Recipient income last hour
iii. Recipient income last day
iv. Recipient last payment date
v. Recipient other channels

The open banking service 71 verifies 935 session security as before, but the process of verifying that the transaction is legitimate differs as the open banking service 71 needs to initiate the fraud detection check - it provides 920' the relevant parameters to the fraud detection module 722 and receives 925' the reported results from it. The following steps, from verification 945 of the payment parameters by the rules module 723 through completion of payment and the communication of the payment result, continue as before.

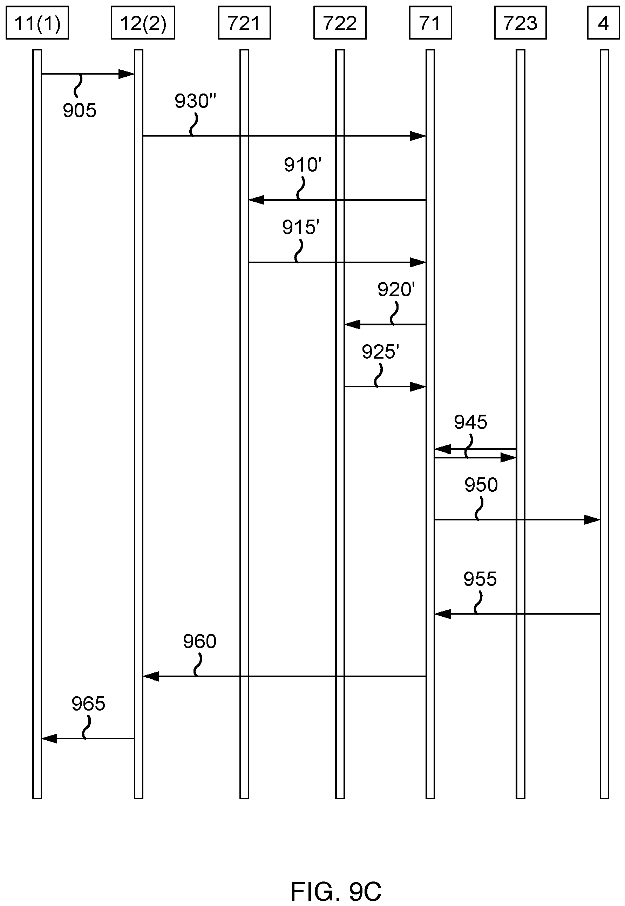

Figure 8C shows an arrangement in which the merchant 2 is only linked to the open banking service 71. The open banking service 71 also connects as before to the session security module 721 for payment session security 83", and to the fraud detection module 722 for fraud determination 84". The associated sequence flow is shown in Figure 9C - it is largely similar to that provided in Figures 9A and 9B (where steps are the same, the same reference number is given), but the differences are set out below.

This time, the flows diverge immediately after the user starts 905 the payment. The user makes a payment request 930" to the open banking service 71, this time providing all the information needed by both the session security module 721 and the fraud detection module 722 - this is as follows:
i. Consent ID
ii. IP Address
iii. Device Fingerprint
iv. User last Login Date
v. User behavioral data
vi. User ID
vii. Recipient ID
viii. Recipient last IP Address
ix. Recipient last login date
x. Amount
xi. Recipient Account info
xii. Other forms of payment
xiii. Recipient income last hour
xiv. Recipient income last day
xv. Recipient last payment date
xvi. Recipient other channels

The open banking service 71 then verifies security of payment with the session security module 721, providing 910' web parameters as follows:
i. IP Address
ii. Device Fingerprint
iii. User last Login Date
iv. User behavioral data
v. User ID
vi. Recipient ID
vii. Recipient last IP Address
viii. Recipient last login date
and receiving a result 915' as before. From the process of verifying that the transaction is legitimate through verification 945 of the payment parameters by the rules module 723 through completion of payment and the communication of the payment result, the transaction flow is then simply as for Figure 9B.

Many modifications may be made to the above examples without departing from the scope of the present disclosure as defined in the accompanying claims.

## Claims

1. A method of making micropayments using an open banking system, comprising, for a customer registered for micropayments to a merchant using an open banking provider within established payment limits using variable recurring payments:
on initiation of a payment by the customer to the merchant, determining the payment to be secure and not fraudulent; and
if the payment is determined to be secure and not fraudulent, the open banking provider authorising the payment if it is within the established payment limits.

2. The method of claim 1, wherein the open banking provider is an open banking service providing open banking services on behalf of an account servicing payment service provider.

3. The method of claim 1 or claim 2, wherein determining the payment to be secure comprises using a web security service to determine that a session for the payment is secure.

4. The method of any preceding claim, wherein determining the payment to be not fraudulent comprises using a fraud detection service to determine that the payment is not fraudulent.

5. The method of any preceding claim, wherein registration of the customer for micropayments is associated with a Consent ID.

6. A method of establishing use of micropayments by a customer for a merchant, comprising:
the customer registering with an open banking provider to make micropayments to the merchant using variable recurring payments;
in a secure session, the customer providing spending parameters agreed with the merchant to the open banking provider and linking the micropayments to a payment account; and
the open banking provider linking the payment of micropayments by the customer to the merchant using the payment account to a Consent ID, the open banking provider providing the Consent ID to the merchant.

7. The method of claim 6, wherein the open banking provider is an open banking service providing open banking services on behalf of an account servicing payment service provider.

8. The method of claim 7, further comprising the open banking service obtaining the Consent ID from the account servicing payment service provider.

9. The method of any of claims 6 to 8, further comprising determining a session to be a secure session, wherein determining the session to be secure comprises using a web security service.

10. The method of any of claims 6 to 9, further comprising agreeing the spending parameters with the merchant prior to providing the spending parameters to the open banking provider.

11. The method of claim 10 where dependent on claim 7, wherein the open banking service establishes a connection to the account servicing payment service provider for the customer to confirm spending parameters and link micropayments to a payment account with the account servicing payment service provider.

12. A transaction system for enabling micropayments using an open banking system, comprising:
an open banking service adapted to register a customer for micropayments to a merchant with an account servicing payment service provider, and to process micropayment transactions received from the merchant in accordance with the registration;
a spending rules service adapted to store spending parameters associated with a micropayment registration and to provide the spending rules to the open banking service.

13. The transaction system of claim 12, further comprising a web security service to determine whether a session is secure.

14. The transaction system of claim 13, wherein the web security service is adapted for use for registration sessions, payment sessions, or both.

15. The transaction system of any of claims 12 to 14, further comprising a fraud detection service to determine whether a transaction is legitimate.
